# EUROPEAN PATENT APPLICATION

(11) **EP 4 345 640 A1**
(43) Date of publication of application: **03.04.2024**
(21) Application number: 22198885.0
(22) Date of filing: 29.09.2022
(51) Int. Cl.: G06F 16/21

(54) **METHOD OF FILTERING A SET OF DATA ACCESS POINTS**

(71) Applicant: Siemens Aktiengesellschaft, 80333 München (DE)
(72) Inventor: Angel Fernandez, Julian Mauricio, 1190 Wien (AT); Avasalcai, Cosmin Florin, 1030 Wien (AT); Geiger, Sebastian, 1050 Wien (AT)
(74) Representative: Siemens Patent Attorneys

(57) **Abstract**

A computer implemented method for the operation of a system comprising a processor with a memory and at least one technical unit, wherein the at least one technical unit is represented by a directed graph, includes providing the directed graph and storing the directed graph in the memory, wherein the directed graph comprises a first and at least one second group of data access points, wherein the directed graph contains directional relational information between the first and the at least one second group of data access points in the form of directed edges, wherein the directed edges can be incoming edges into the first and/or the at least one second group and/or outgoing edges from the first and/or the at least one second group and wherein the data access points comprise at least one operating parameter of the at least one technical unit; calculating a filter criterion by the processor using the directed graph, wherein the filter criterion selects data access points within groups with only outgoing edges; applying the filter criterion on the directed graph; storing the data access points selected by the filter criterion in the memory as a first result set of data access points; creating a knowledge graph comprising the first result set and storing the knowledge graph in the memory; providing a data query for the at least one operating parameter of the at least one technical unit; applying the data query on the knowledge graph and obtaining a second result set; controlling the operation of the at least one technical unit using the second result set.

## Description

### Technical field

This application relates to industrial systems. More particularly, this application relates to a computer implemented method of filtering a set of data access points for controlling the operation of at least one technical unit.

### Background

Typically, in a technical system with one or more technical units there is a vast amount of data access points which describe these technical units. Therefore, it is a difficult and computation-intensive task for a processor to respond to a data query for these data access points, especially when low-cost, non-powerful processors are used. However, in most cases only a small set of data access points is relevant and necessary for controlling the operation of a technical unit. It is therefore a goal of the present invention to provide a computer implemented method that optimizes the internal procedures of a processor.

### Summary

The object of the invention is achieved by the independent claims. The dependent claims describe advantageous developments and modifications of the invention.

According to aspects of one embodiment of this disclosure, a computer implemented method for the operation of a system comprising a processor with a memory and at least one technical unit, wherein the at least one technical unit is represented by a directed graph, includes
- providing the directed graph and storing the directed graph in the memory, wherein the directed graph comprises a first and at least one second group of data access points, wherein the directed graph contains directional relational information between the first and the at least one second group of data access points in the form of directed edges, wherein the directed edges can be incoming edges into the first and/or the at least one second group and/or outgoing edges from the first and/or the at least one second group and wherein the data access points comprise at least one operating parameter of the at least one technical unit;
- calculating a filter criterion by the processor using the directed graph, wherein the filter criterion selects data access points within groups with only outgoing edges;
- applying the filter criterion on the directed graph;
- storing the data access points selected by the filter criterion in the memory as a first result set of data access points;
- creating a knowledge graph comprising the first result set and storing the knowledge graph in the memory;
- providing a data query for the at least one operating parameter of the at least one technical unit;
- applying the data query on the knowledge graph and obtaining a second result set and
- controlling the operation of the at least one technical unit using the second result set.

The method filters out relevant operational parameters for the operation of the at least one technical unit by the filter criterion. This reduces the complexity of a data query and increases the performance of the system. Also, the procedure in the processor for the investigation of the relevant data access points is facilitated and the internal procedures within the processor are improved.

Additionally in some embodiments, each data access point comprises a first ID and a second ID, wherein the first ID defines its affiliation to the first or the at least one second group of data access points and the second ID references the data access point. This is an efficient and resource-saving way of categorizing the data access points.

According to an embodiment, the knowledge graph is a GraphQL schema and/or the data query is a GraphQL query. GraphQL is a data query and manipulation language that allows for the query and for the answer to be of the same structure, therefore preventing excessively large amounts of data from being returned.

According to some embodiments of this disclosure, the directed graph is an Open Platform Communications Unified Architecture (OPC UA) representation of the at least one technical unit, wherein the first and the at least one second group of data access points are companion specifications in the OPC UA. The OPC UA facilitates a structured representation of technical units and reduces programming effort.

Additionally in some embodiments, the set of data access points is compliant to the OPC UA companion specifications for the specific technical unit, e.g. UA, DI, IA, Machinery, Robotics, MachineTool or I4AAS. This again facilitates a structured representation of technical units and reduces programming effort.

According to an embodiment, a data processing system includes a processor with a memory and at least one technical unit configured to carry out the computer implemented method.

Additionally in some embodiments, the technical unit is an industrial robot, a motion device, an actuator, an electrical motor, a machine tool or an IoT device.

According to some embodiments, the technical unit is compliant with the Open Platform Communications Unified Architecture (OPC UA) Industrial Interoperability Standard. This again facilitates a structured representation of technical units and reduces programming effort.

According to an embodiment, a computer program product includes instructions which, when the program is executed by a computer, cause the computer to carry out the computer implemented method.

### Brief description of the drawings

The foregoing and other aspects of the present invention are best understood from the following detailed description when read in connection with the accompanying drawings. For the purpose of illustrating the invention, there is shown in the drawings embodiments that are presently preferred, it being understood, however, that the invention is not limited to the specific instrumentalities disclosed. Included in the drawings are the following figures:
Fig. 1 is a directed graph representing different kinds of technical units.
Fig. 2 is a segment of the directed graph of Fig. 1 representing a single kind of technical units.
Fig. 3 is a node diagram of the segment of the directed graph of Fig. 2
Fig. 4 is a block diagram of an example of the steps of the computer implemented method.

### Detailed description

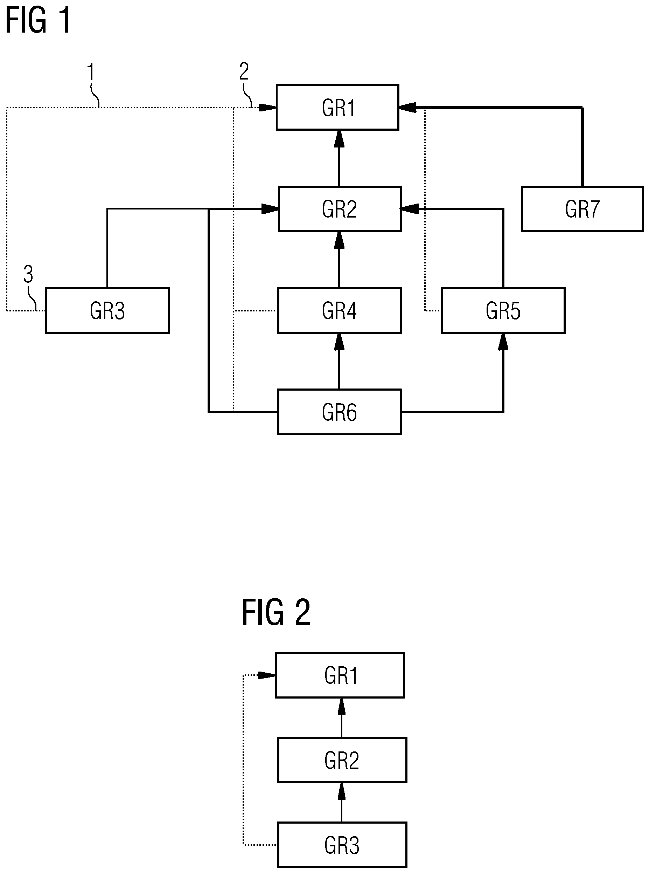

Fig. 1 shows a block diagram of various groups of data access points. The block diagram is a directed graph comprising groups of data access points, that are connected by directed edges 1. A directed edge 1 can be an incoming edge 2 or an outgoing edge 3. An incoming edge 2 to a group is defined as an arrow pointing towards the group. An outgoing edge 3 is defined as an arrow pointing away from the group. The directed edges 1 indicate dependencies. A dependency indicates that data access points within a certain group depend on information contained in data access points within another group. This information can be e.g. definitions of variables. For example, in Fig. 1 the directed edge 1 coming out of group 3 GR3 and coming into group 2 GR2 indicates, that the data access points of group 3 GR3 are dependent on information contained in data access points of group 2 GR2.

Furthermore, in this example the directed graph has no directed cycles, meaning that following the directed edges 1 will never form a closed loop. Therefore, it is a directed acyclic graph (DAG). Also, as can be seen in the example, some groups do not have incoming edges 2, i.e. only outgoing edges 3, meaning that no other group is dependent on them.

The example of Fig. 1 represents a system of several technical units of a different kind. For example, group 3 GR3 represents data access points, that are specifically needed for the representation of an industrial robot. Group 3 GR3 is dependent on group 2 GR2 and group 1 GR1, wherein the last two groups represent data access points that contain information that is not only needed for the representation of an industrial robot but can be used to represent other technical units as well.

In the presented example of Fig. 1, the directed graph is an Open Platform Communications Unified Architecture (OPC UA) representation of a system of technical units, wherein groups GR1..GR7 represent companion specification namespaces.

The Open Platform Communications Unified Architecture (OPC UA) is an industrial interoperability standard that specifies information exchange for industrial communication.

In the OPC UA, there are definitions for various companion specifications. A companion specification is a framework including various dependencies, that are represented by directed edges, and data access points.

In one embodiment group 1 GR1 is the companion specification namespace "UA", group 2 GR2 is the companion specification namespace "DI", group 3 GR3 is the companion specification namespace "Robotics", group 4 GR4 is the companion specification namespace "Machinery", group 5 GR5 is the companion specification namespace "IA", group 6 GR6 is the companion specification namespace "MachineTool" and group 7 GR7 is the companion specification namespace "I4AAS".

Fig. 2 shows a segment of the directed graph of Fig. 1. In the present example, Fig. 2 shows all groups that are necessary for the representation of a technical unit such as an industrial robot. An industrial robot, that is compliant to the OPC UA Industrial Interoperability Standard, requires the Robotics companion specifications, depicted as group 3 GR3. The Robotics companion specification is dependent on the UA and DI companion specifications, depicted as group 1 GR1 and group 2 GR2 respectively, and the DI companion specification, depicted as group 2 GR2 is dependent again on the UA companion specification, depicted as group 1 GR1.

All the companion specifications contain data access points. All data access points of a certain companion specification form a group of data access points. For practical use in a data query, only the groups of data access points of the leaf companion specification is of interest. A leaf companion specification is a companion specification with only outgoing edges, meaning that no other companion specification is dependent on it. The leaf companion specification - in the example mentioned above the leaf companion specification is Robotics - contains data access points for data like temperature, acceleration, velocity, position etc. for measuring points like motors, sensors, actuators, axes etc.

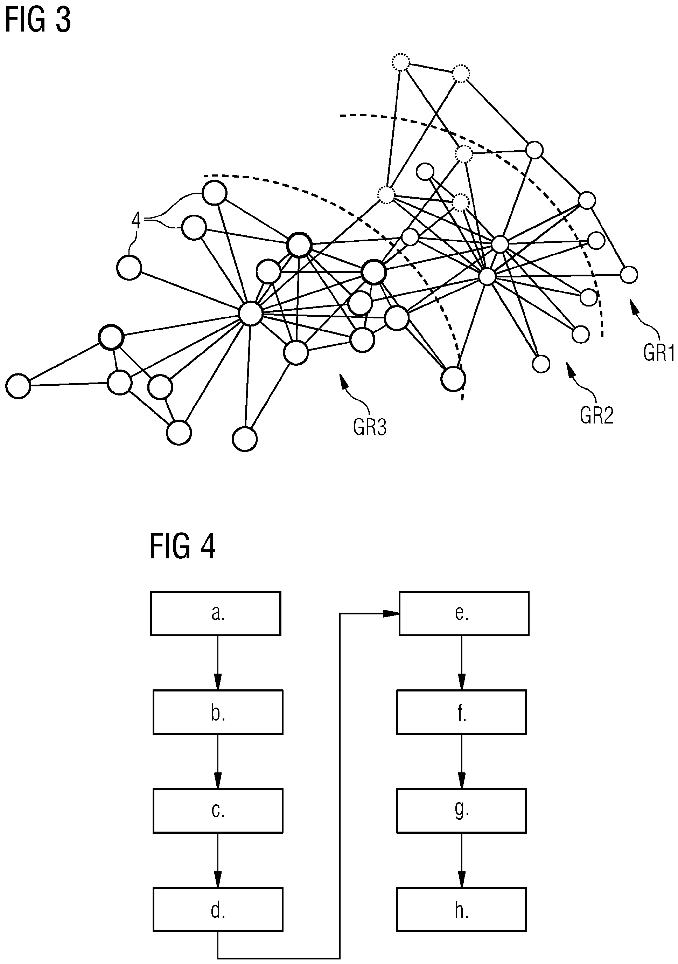

Fig. 3 shows a node diagram of the segment of the directed graph of Fig. 2. Each data access point 4 is depicted as a node, that is connected to other data access points 4. The connection between the various data access points 4 indicates that a data access point 4 is dependent on information contained in another data access point 4. The dashed line indicates that the data access points 4 either belong to group 1 GR1, group 2 GR2 or group 3 GR3.

Fig. 4 shows a block diagram of the steps of the computer implemented method. The sequence of the steps is an implementation example. Some of the steps might be performed at the same time while others may be performed in a different sequence.

Step a. comprises providing the directed graph and storing the directed graph in the memory, wherein the directed graph comprises a first and at least one second group of data access points, wherein the directed graph contains directional relational information between the first and the at least one second group of data access points in the form of directed edges, wherein the directed edges can be incoming edges into the first and/or the at least one second group and/or outgoing edges from the first and/or the at least one second group and wherein the data access points comprise at least one operating parameter of the at least one technical unit.

The directed graph is provided by registering at least one technical unit to the system. The technical is providing information to the system during registration, by which data access points it is represented.

The data access points may comprise a first ID and a second ID, wherein the first ID defines its affiliation to the first or the at least one second group of data access points and the second ID references the data access point.

Step b. comprises calculating a filter criterion by the processor using the directed graph, wherein the filter criterion selects data access points within groups with only outgoing edges.

Step c. comprises applying the filter criterion on the directed graph.

Step d. comprises storing the data access points selected by the filter criterion in the memory as a first result set of data access points.

Step e. comprises creating a knowledge graph comprising the first result set and storing the knowledge graph in the memory. The knowledge graph may be a GraphQL schema.

Step f. comprises providing a data query for the at least one operating parameter of the at least one technical unit. The data query may be a GraphQL query.

Step g. applying the data query on the knowledge graph and obtaining a second result set. The second result set may contain at least one operating parameter of the at least one technical unit. This operating parameter may be a value for rotational speed, temperature, acceleration, velocity, position, voltage, current etc. of components like actuators, motors, gears, sensors etc. of the at least one technical unit.

Step h. comprises controlling the operation of the at least one technical unit using the second result set.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

### List of reference signs

- 1: directed edge
- 2: incoming edge
- 3: outgoing edge
- 4: data access point
- GR1: group 1
- GR2: group 2
- GR3: group 3
- GR4: group 4
- GR5: group 5
- GR6: group 6
- GR7: group 7

## Claims

1. Computer implemented method for the operation of a system comprising a processor with a memory and at least one technical unit, wherein the at least one technical unit is represented by a directed graph, comprising:
a. Providing the directed graph and storing the directed graph in the memory, wherein the directed graph comprises a first and at least one second group of data access points (4), wherein the directed graph contains directional relational information between the first and the at least one second group of data access points (4) in the form of directed edges (1), wherein the directed edges can be incoming edges (2) into the first and/or the at least one second group and/or outgoing edges (3) from the first and/or the at least one second group and wherein the data access points comprise at least one operating parameter of the at least one technical unit;
b. Calculating a filter criterion by the processor using the directed graph, wherein the filter criterion selects data access points (4) within groups with only outgoing edges (3);
c. Applying the filter criterion on the directed graph;
d. Storing the data access points (4) selected by the filter criterion in the memory as a first result set of data access points (4);
e. Creating a knowledge graph comprising the first result set and storing the knowledge graph in the memory;
f. Providing a data query for the at least one operating parameter of the at least one technical unit;
g. Applying the data query on the knowledge graph and obtaining a second result set;
h. Controlling the operation of the at least one technical unit using the second result set.

2. Method of claim 1, wherein each data access point (4) comprises a first ID and a second ID, wherein the first ID defines its affiliation to the first or the at least one second group of data access points (4) and the second ID references the data access point (4).

3. Method of any of the preceding claims, wherein the knowledge graph is a GraphQL schema.

4. Method of any of the preceding claims, wherein the data query is a GraphQL query.

5. Method of any of the preceding claims, wherein the directed graph is an Open Platform Communications Unified Architecture (OPC UA) representation of the at least one technical unit, wherein the first and the at least one second group of data access points (4) are companion specifications in the OPC UA.

6. Method of claim 5, wherein the set of data access points is compliant to the OPC UA companion specifications for the specific technical unit, e.g. UA, DI, IA, Machinery, Robotics, MachineTool or I4AAS.

7. Data processing system comprising a processor with a memory and at least one technical unit configured to carry out the method of any of the preceding claims.

8. System of claim 7, wherein the technical unit is an industrial robot, a motion device, an actuator, an electrical motor, a machine tool or an IoT device.

9. System of any of the claims 7 or 8, wherein the technical unit is compliant with the Open Platform Communications Unified Architecture (OPC UA) Industrial Interoperability Standard.

10. Computer program product comprising instructions which, when the program is executed by a computer, cause the computer to carry out the steps of the method of claims 1 to 6.
